# EUROPÄISCHE PATENTANMELDUNG

(11) **EP 0 678 479 A1**
(43) Veröffentlichungstag der Anmeldung: **25.10.1995**
(21) Anmeldenummer: 95105924.5
(22) Anmeldetag: 20.04.1995
(51) Int. Cl.: C02F 1/50, C02F 1/28

(54) **Mittel zur Verminderung des natürlichen Algenwachstums**

(30) Priorität: 20.04.1994 DE 9406589 U
(71) Anmelder: Süd-Agrar Produktions-Vertriebsgesellschaft mit beschränkter Haftung, D-88427 Bad Schussenried (DE)
(72) Erfinder: Pirotte, Wilhelm, 53773 Hennef (DE); Wintersperge, Berndt, 82194 Gröbenzell (DE); Kaiser, Günter, 88427 Bad Schussenried (DE)
(74) Vertreter: König, Beate, Dipl.-Phys. Dr.

(57) **Zusammenfassung**

Gegenstand der Erfindung ist ein Mittel zur Verminderung des natürlichen Algenwachstums. Das Mittel besteht aus zerkleinertem Stroh (21), welches in eine geschlossene Umhüllung (5) aus wasserdurchlässigem Material eingefüllt ist. Diese gefüllte Umhüllung wird in das zu pflegende Wasservolumen (2) eingehängt. Die aktive Substanz, d.h. das zerkleinerte Stroh wird vorzugsweise als stückige und pulverige Substanz, erhalten durch mechanische Zerkleinerung des Strohs, verwendet.

## Beschreibung

Die Erfindung bezieht sich auf ein Mittel zur Zugabe in begrenzte Wasservolumina zur Verminderung des natürlichen Algenwachstums. Die Herabsetzung oder nahezu vollständige Vermeidung von Algenentstehung und -wachstum erfolgt durch die Zugabe des erfindungsgemäßen Mittels zu stehenden oder nur wenig bewegten, d.h. mit relativ kleinen Mengen an Frischwasserzufuhr versorgten größeren oder insbesondere kleineren Wasserbecken, wie Zierteiche und Aquarien.

In solchen stehenden oder nur wenig bewegten, relativ abgeschlossenen Gewässern kommt es unter natürlichen Bedingungen bereits nach kurzer Zeit zu einem starken Algenwachstum, wobei in Abhängigkeit von den klimatischen Bedingungen, der Wassertemperatur, der Wassertiefe und der sonstigen im Wasser angesiedelten Flora und Fauna die unterschiedlichsten Algenarten vorkommen, die sich teilweise sehr üppig vermehren. Ohne den Zusatz von Mitteln, die das Algenwachstum eindämmen oder verhindern, ist von dieser Erscheinung nahezu jedes Wasservolumen betroffen, sofern äußere Einflüsse auf das Wasser einwirken können und es sich nicht um speziell destilliertes oder anderweitig sterilisiertes Wasser handelt. Ein starkes Algenwachstum kann unter anderem die Entwicklung anderer im Wasser angesiedelter Pflanzen beeinträchtigen oder verhindern. Außerdem leiden bei einem starken Algenwachstum die Qualität und die Ansehnlichkeit des Wassers und unter Umständen des Wasserbehälters. In Aquarien kommt es zu einem starken Algenbewuchs an den Aquarienscheiben, wodurch die Sicht in das Innere des Aquariums zunehmend verschlechtert wird. Bei kleineren Gartenteichen oder Schwimmbecken werden die Wände und der Boden der Wasserbecken oftmals stark von einem Algenwachstum befallen.

Die Verhinderung eines starken Algenwachstums in diesen Wasserreservoiren kann beispielsweise durch die Zugabe von chemischen Mitteln erfolgen, die das Wachstum einer oder mehrere Algenarten etwa durch Veränderung des pH-Wertes des Wassers verringern. Der Zusatz von chemischen Materialien hat unter anderem den Nachteil, daß das Wasser chemisch belastet wird, was sich negativ auf die anderen Lebewesen, die sich in dem Wasservolumen befinden, auswirkt. Insbesondere in Aquarien ist die Zugabe von Chemikalien zur Algenbekämpfung schwierig, da tropische Zierfische besonders empfindlich auf eine durch chemische Zusätze verminderte Wassergüte reagieren.

Eine zweite Möglichkeit der Algenbekämpfung besteht darin, die sich an den Wänden des mit Wasser gefüllten Behälters ansetzenden Algen von Zeit zu Zeit mechanisch zu entfernen. Bei unregelmäßigen Flächen, z.B. bei einem steinigen Untergrund, ist die Säuberung sehr zeitaufwendig oder nur sehr eingeschränkt möglich. Das Entfernen der Algen von bestimmten Flächen innerhalb des Wasserreservoirs verringert das Algenwachstum außerdem nicht. Die mechanisch entfernten Algenbestandteile führen zur Wassertrübung und können nur durch aufwendige Filtersysteme aus dem Wasser entfernt werden.

Es ist auch bekannt, daß durch Einhängen von Strohbündeln in das Wasser das Algenwachstum gehemmt werden kann. Dies ist jedoch nur bei größeren Wasservolumina zweckmäßig, während bei kleinen Wasservolumina wie kleinen Zierteichen und Aquarien das Stroh den ästhetischen Eindruck stören würde.

In anderem Zusammenhang ist aus der europäischen Patentschrift 0 310 016 ein Material aus gemahlenem und danach gepreßtem Stroh bekannt, das dem Aufsaugen von Flüssigkeiten dient. Es wird als Einstreumaterial für Kleintiere, insbesondere als Katzenstreu verwendet. Dieses Einstreumaterial weist gute Aufsaugeigenschaften gegenüber dünnflüssigen bzw. wäßrigen Flüssigkeiten auf. Es ist bisher jedoch keine Anwendung bekannt, die von solchen Materialien im Zusammenhang mit der Verminderung des Algenwachstums Gebrauch macht.

Der Erfindung liegt die Aufgabe zugrunde, ein Mittel zur Verfügung zu stellen, welches zur Zugabe auch in kleine Wasservolumina und zur Verminderung des natürlichen Algenwachstums unter Vermeidung der genannten Nachteile geeignet ist.

Diese Aufgabe wird dadurch gelöst, daß das Mittel aus zerkleinertem Stroh besteht, welches in eine geschlossene Umhüllung aus wasserdurchlässigem Material eingefüllt ist.

Die aktive Substanz des Mittels zur Verminderung des Algenwachstums bildet das zerkleinerte Stroh, welches in unterschiedlichen Konfigurationen, insbesondere als stückige und pulverige Substanz, erhalten durch mechanische Zerkleinerung des Strohs, verwendet wird. Die mechanische Zerkleinerung kann zweckmäßig durch Mahlen in einer Hammermühle erhalten werden. Vorzugsweise wird das zerkleinerte Stroh in Korngrößen zwischen 1/4 und 5 mm, insbesondere zwischen jeweils einschließlich 1/2 und 2 mm verwendet. In dieser Form kann das Stroh gut dosiert werden und es entsteht wenig Staub, der bei Herstellung, Konfektion und Transport nachteilig ist. Andererseits erfährt das Stroh keine übermäßige mechanische oder thermische Beanspruchung.

Die Umhüllung hat demgegenüber die Aufgabe, einerseits das zerkleinerte Stroh zusammenzuhalten, wodurch eine unkontrollierte Verteilung der einzelnen Strohpartikel innerhalb des Wasservolumens verhindert wird und die einfache Entnahme und der Austausch der verbrauchten Strohpartikel möglich ist, und andererseits das Wasser im wesentlichen ungehindert an die aktive Substanz heranzubringen, wobei ein sich bei der Verbindung des Wassers mit der aktiven Substanz bildender Sud ungehindert aus der Umhüllung austreten kann. Der Sind, der bei der Einwirkung des Wassers auf das in der Umhüllung enthaltene, zerkleinerte Stroh entsteht, bewirkt eine Degenerierung bereits bestehender Algen und vermindert oder verhindert über einen bestimmten Zeitraum, der abhängig von der prozentualen Menge des Suds im Wasservolumen und von den übrigen klimatischen Bedingungen ist, das Wachstum neuer Algen.

Die Umhüllung kann ein aus feinmaschigem Fasermaterial, z.B. technischem Vliesmaterial, bestehender Sack sein, der an seinen Enden beispielsweise verschweißt ist. Alternativ kann die Umhüllung auch ein Sack aus Kunststoffmaterial mit einer Vielzahl von Löchern und einer größeren veschließbaren Einfüllöffnung sein. Jedenfalls muß die Umhüllung wasserdurchlässig sein, um die wachstumsverhindernde Wirksamkeit des Strohs zu gewährleisten. Die gefüllte Umhüllung wird in das zu pflegende Wasservolumen eingebracht und der Inhalt wird entsprechend den Erfordernissen ausgetauscht. Dabei kann die Umhüllung z.B. bei Aquarien z.B. mit Hilfe von Saugnäpfen an der Wand befestigt werden.

Das erfindungsgemäße Mittel bietet gegenüber bekannten, chemischen Materialen zur Verminderung des Algenwachstums den Vorteil, daß seine aktive Substanz, die in die Umhüllung eingefüllt ist, aus einem natürlichen Rohstoff gewonnen wird und nach seinem Gebrauch einfach und umweltneutral entsorgt werden kann, z.B. durch Kompostierung oder Verbrennung. Die Entsorgung über die Haustoilette ist problemlos. Das Umhüllungselement selbst kann je nach dem dafür verwendeten Material wiederverwendet oder ebenfalls kompostiert werden. Weiterhin sind keine negativen Einflüsse auf die Flora und Fauna des Wasservolumens zu befürchten, daß das erfindungsgemäße Mittel ohne chemische Zusätze hergestellt wird. Seine Herstellung ist unkompliziert und die Handhabung erfordert keine Vorsichtsmaßnahmen. Eine schädliche Überdosierung kann nicht vorkommen, da das Mittel die Wasserqualität auch bei höherer Dosierung nur wenig verändert.

Die Aufbereitung des Strohs zu Füllmaterial ist einfach. Mahlen des Strohs reicht für die gewünschten Zwecke an sich aus. Möglichst zu verhindern ist eine Staubbildung, da diese wie erwähnt für Herstellung, Konfektion und Transport nachteilig ist.

Das erfindungsgemäße Mittel gibt im Wasser den Sind ab, der aus der aktiven Substanz abgesondert wird und, gemäß einer Erklärung seiner Wirksamkeit, auf natürliche Art und Weise auf das Nährstoffgleichgewicht im Wasser einwirkt, wodurch das Wachstum der Algen deutlich verringert wird und Mikroorganismen, die die Bildung von Algen verhindern, besonders gute Lebensbeingungen vorfinden und daher vermehrt auftreten.

Um die Wirkung des Mittels sicherzustellen, ist eine Erneuerung von Zeit zu Zeit erforderlich, wobei sich die Menge der einzubringenden aktiven Substanz und der Abstand zwischen den Erneuerungen aus der zu pflegenden Wassermenge und den übrigen klimatischen Bedingungen, die ihrerseits das Wachstum der Algen positiv beeinflussen, ergeben. Sofern sich im Wasser auch andere Lebewesen befinden, ist es möglich, daß kleinste Partikel der aktiven Substanz, die aus der Umhüllung ausgetreten sind, von diesen Lebewesen als Nahrungsquelle genutzt werden. Außerdem ist die Erneuerung des Mittels erforderlich, um das Verwesen der aktiven Substanz zu verhindern. Es hat sich gezeigt, daß die Erneuerung im Abstand von ca. vier bis fünf Wochen zweckmäßig ist.

Die Verwesungsgefahr der aktiven Substanz ist besonders hoch, wenn das Mittel an der Wasseroberfläche schwimmt. Bei Umhüllungselementen, die selbst schwimmen oder nur ein geringes Eigengewicht besitzen, würde der Auftrieb der aus den Strohpartikeln bestehenden aktiven Substanz dazu führen, daß das Mittel an der Oberfläche schwimmt. Dies kann dadurch vermieden werden, daß das Mittel bis auf den Boden des Wasservolumens absinkt, indem sich zusätzlich ein Beschwerungselement von geeignetem Gewicht und hoher Dichte in der Umhüllung befindet. Daß das Mittel am Boden des Wasserbehälters zu liegen kommt, ist auch bezüglich des optischen Eindrucks vorteilhaft. Weitere Möglichkeiten, ein Schwimmen des Mittels zu verhindern, bestehen darin, das Mittel im Grund zu verankern oder z.B. bei Aquarien, bei denen die Fische bevorzugt am Boden herumstöbern, das Mittel an der Wand zu befestigen oder von oben einschließlich einer Beschwerung einzuhängen.

Eine Unterstützung des durch das erfindungsgemäß in das Wasser eingebrachte zerkleinerte Stroh bewirkten Prozesses kann durch den Zusatz von Sauerstoffgranulat erzielt werden. Zweckmäßig beträgt die Menge des Zusatzes zwischen 5 und 20 Gewichtsprozent, vorzugsweise etwa 10 Gewichtsprozent der Füllmenge.

Weiterhin kann zur Beschleunigung dieses Prozesses auch Ferrit, das als Düngerbestandteil in Mineraldüngern zur Unterstützung der Photosynthese bekannt ist, der Füllung zugegeben werden.

Weitere Vorteile, Einzelheiten und Weiterbildungen der Erfindung ergeben sich aus der nachfolgenden Beschreibung bevorzugter Ausführungsformen des erfindungsgemäßen Mittels und seiner Herstellung unter Bezugnahme auf die Zeichnung. Es zeigen:
- Fig. 1: ein Aquarium mit einem erfindungsgemäßen Mittel in Form eines Beutels,
- Fig. 2: den Beutel von Fig. 1 in vergrößerter Darstellung, von hinten gesehen, und
- Fig. 3: eine Seitenansicht des Beutels von Fig. 2.

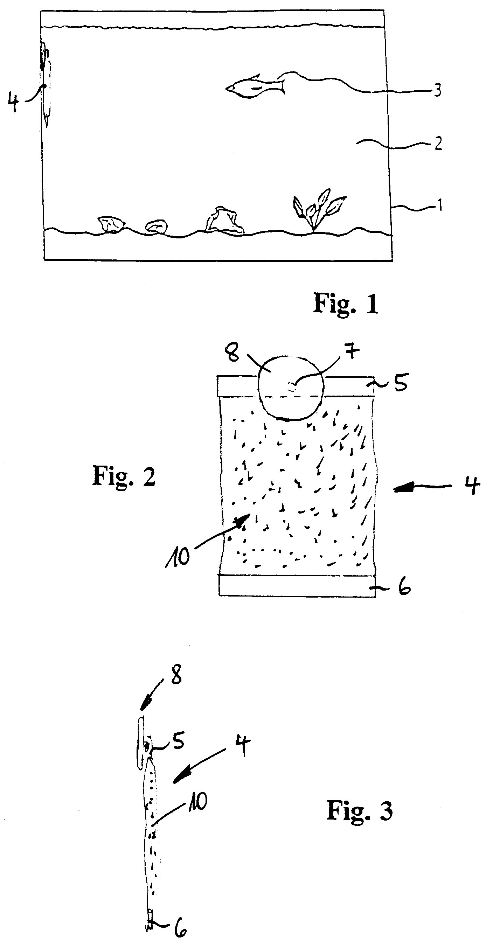

In Fig. 1 ist ein Aquarium 1 mit einem begrenzten Wasservolumen 2 gezeigt. Begrenzte stehende oder nur langsam fließende Wasservolumina neigen zu einer starken Algenbildung. Innerhalb des Aquariums befinden sich im begrenzeten Wasservolumen 2 eine Vielzahl von Lebewesen, beispielsweise tropische Zierfische 3, die besonders empfindlich auf eine schlechte Wasserqualität oder chemische Zusätze zur Bekämpfung der Algenbildung reagieren. Zur Verminderung des Algenwachstums und/oder zur Degenerierung bereits bestehender Algen ist in das Wasservolumen ein als Mittel zur Verminderung des natürlichen Algenwachstums ein Beutel 4 eingebracht worden.

Der Beutel 4, der in Fig. 2 vergrößert in einer Rückansicht dargestellt ist, ist im veranschaulichten Ausführungsbeispiel mittels eines Saugnapfs 8 an der Aquariumscheibe befestigt. Der Beutel 4 besteht im wesentlichen aus einer Umhüllung, die eine aktive Substanz enthält. Im gezeigten Beispiel ist die Umhüllung ein aus einem Gewebe aus Natur- oder Kunststoffasern hergestellter Beutel oder Sack. Das Gewebe weist eine Maschendichte auf, die es ermöglicht, daß das Wasser in das Innere der Umhüllung eindringt, jedoch keine aktive Substanz aus der Umhüllung austritt. Der Beutel des dargestellten Ausführungsbeispiels der Erfindung ist an seiner Rückseite am oberen und am unteren Ende unter Bildung zweier Doppellagen 5, 6 umgeschlagen und verschlossen. Die obere Doppellage 5 des Beutels 4 weist ein Loch 7 auf, in dem der oben erwähnte Saugnapf 8 befestigt ist. Die Saugnapfbefestigung ermöglicht es, den Beutel 4 für die von Zeit zu Zeit erforderlichen Erneuerung des Mittels einfach aus dem Aquarium 1 zu entnehmen.

Fig. 2 zeigt den gefüllten Beutel 4 in einem unbenutzten Zustand, d.h. er wurde noch nicht in ein Wasservolumen 2 eingebracht. Der die Umhüllung 5 bildende Beutel ist mit der aktiven Substanz 10 locker gefüllt. Nach dem Einfüllen der aktiven Substanz wurde die Einfüllöffnung des Beutels 4 unter Bildung der Doppellage 5 verschlossen. Selbstverständlich kann er auch verklebt oder z.B. im Fall von Kunststoffmaterial verschweißt werden.

Die Seitenansicht von Fig. 3 veranschaulicht weiter die Gestalt des Beutels 4 und seine Anbringung. zeigt dieses in dem Zustand, den es auch in Fig. 1 besitzt, d.h. das Mittel 4 befindet sich im Wasservolumen 2. Innerhalb der Umhüllung 5 befindet sich als aktive Substanz zerkleinertes Strohmehl.

Im Beutel 4 kann sich wenigstens ein Beschwerungselement 8 befinden, das aus einem Material mit großem Gewicht und hoher Dichte besteht. Als Beschwerungselemente 8 eignen sich z.B. Steine. Das Beschwerungselement 8 ist bezüglich Gewicht und Dichte so bemessen, daß der Auftrieb des Mittels 4 im Wasser überwunden wird, auch wenn sich an diesem Gasbläschen anlagern, und das Mittel 4 selbständig auf den Boden des Aquariums 1 sinkt und dort liegen bleibt, bis es von Hand wieder entnommen wird. Die Beschwerungselemente können entfallen, wenn das Mittel auf andere Weise, z.B. durch eine Verankerung, am Aufschwimmen gehindert ist.

In der dargestellten Form ist das Mittel erfindungsgemäß für die Verminderung des Algenwachstums in einem Aquarium vorgesehen. Es kann in entsprechender Form, ggf. mit Zusätzen, in geeigneter Dosierung auch in Biotopen, Kommunalgewässern und Fischteichen eingesetzt werden.

Für die Herstellung des zerkleinerten Strohs 10 als aktive Substanz des erfindungsgemäßen Mittels ist das Grundmaterial Stroh. Damit besteht die aktive Substanz, im Gegensatz zu den meisten bekannten Materialien zur Verminderung des Algenwachstums, aus einer organischen Substanz. Das gewöhnlich zu Ballen gebundene Stroh wird im ersten Herstellungsschritt aufgelöst und einer groben Häckselung unterzogen. Danach liegen Strohsplitter vor. Diese Strohsplitter lassen sich bereits dazu verwenden, das Algenwachstum in großen Wasserreservoiren zu verringern. Sie sind dann direkt in eine Umhüllung einzufüllen, welche in das Wasser gegeben wird.

Bessere Ergebnisse werden mit aktiven Substanzen erzielt, die wie folgt weiter verarbeitet wurden. Nach einem eventuellen Trocknungsschritt wird das Stroh weiter mechanisch zerkleinert, so daß eine stückige und pulverige Substanz erhalten wird. In der feinsten Form kann dies Strohmehl, das jedoch nicht allzu fein sein sollte, um unerwünschte Staubbildung zu vermeiden. Nach einem eventuellen Siebschritt wird das zerkleinerte Stroh konfektioniert bzw. abgepackt.

Die Umhüllung 4 besteht aus einem Material, welches das Eindringen des Wasser nahezu ungehindert ermöglicht, jedoch das Austreten der aktiven Substanz verhindert. Dazu eignen sich beispielsweise Gewebe aus Natur oder Kunststoffasern oder engmaschige Netze, desgleichen Drahtnetze nach Art von Sieben oder gelochte Dosen usw. oder auch Kombinationen solcher Teile. Das Umhüllungselement ist in einer Ausführungsform sackartig gestaltet. Ein solcher Sack wird mit aktiver Substanz gefüllt und dann verschlossen.

Als Beschwerungsmittel zum Einbringen in das Umhüllung eignen sich Steine oder andere Körper mit hoher Dichte, die sich in Wasser nicht auflösen, gegenüber dem Wasser und den darin vorkommenden Lebewesen ein neutrales Verhalten zeigen und schließlich keine Umweltprobleme bei der Entsorgung bereiten.

Das erfindungsgemäße Mittel zeichnet sich durch eine gute Wirkung bei der Verminderung des natürlichen Algenwachstums in beliebigen Wasservolumina aus. Als aktive Substanz wird ein natürlicher, nachwachsender Rohstoff verwendet, der nach Gebrauch relativ einfach entsorgt werden kann. Es weist den Vorteil auf, daß mit einer geringeren Menge an Material in nicht störender Weise auch bei einem kleineren Wasservolumen das Algenwachstum deutlich vermindert werden kann.

## Patentansprüche

1. Mittel zur Zugabe in begrenzte Wasservolumina (2) zur Verminderung des natürlichen Algenwachstums, dadurch **gekennzeichnet,** daß es aus zerkleinertem Stroh (10) besteht, welches in eine geschlossene Umhüllung (4) aus wasserdurchlässigem Material eingefüllt ist.

2. Mittel nach Anspruch 1, dadurch **gekennzeichnet,** daß das zerkleinerte Stroh (10) eine stückige und pulverige Substanz, erhalten durch mechanische Zerkleinerung des Stroh, ist.

3. Mittel nach Anspruch 2, dadurch **gekennzeichnet,** daß die Korngröße des zerkleinerten Strohs (10) zwischen 1/4 und 5 mm liegt.

4. Mittel nach Anspruch 3, dadurch **gekennzeichnet,** daß die Korngröße des zerkleinerten Strohs (10) zwischen einschließlich 1/2 und 2 mm liegt.

5. Mittel nach einem der Ansprüche 1 bis 4, dadurch **gekennzeichnet,** daß dem zerkleinerten Stroh Sauerstoffgranulat zugegeben worden ist.

6. Mittel nach Anspruch 5, dadurch **gekennzeichnet,** daß der Anteil des Sauerstoffgranulats an der Füllung zwischen 5 und 20 Gewichtsprozent ist.

7. Mittel nach Anspruch 6, dadurch **gekennzeichnet,** daß der Anteil des Sauerstoffgranulats an der Füllung etwa 10 Gewichtsprozent ist.

8. Mittel nach Anspruch 7, dadurch **gekennzeichnet,** daß es als Zusatz Ferrit enthält.

9. Mittel nach einem der Ansprüche 1 bis 8, dadurch **gekennzeichnet,** daß die Umhüllung ein aus grobmaschigem Fasermaterial bestehender Sack ist.

10. Mittel nach Anspruch 9, dadurch **gekennzeichnet,** daß die Umhüllung (4) aus Vliesmaterial ist.

11. Mittel nach Anspruch 9 oder 10, dadurch **gekennzeichnet,** daß der Sack an den Enden verschweißt ist.

12. Mittel nach einem der Ansprüche 1 bis 8, dadurch **gekennzeichnet,** daß die Umhüllung ein Sack aus Kunststoffmaterial mit einer Vielzahl von kleinen Löchern ist.

13. Mittel nach einem der Ansprüche 1 bis 8, dadurch **gekennzeichnet,** daß die Umhüllung eine aus Metall oder Kunststoff bestehende Kapsel mit einer Vielzahl von kleinen Löchern ist.

14. Mittel nach Anspruch 13, dadurch **gekennzeichnet,** daß die Umhüllung öffenbar ist.

15. Mittel nach einem der Ansprüche 1 bis 14, dadurch **gekennzeichnet,** daß in die Umhüllung (4) weiterhin ein Beschwerungselement eingefügt ist.

16. Mittel nach einem der Ansprüche 1 bis 15, die Umhüllung (4) mit einem oder mehreren Saugnäpfen (8) versehen ist.
